# EUROPÄISCHE PATENTANMELDUNG

(11) **EP 1 095 817 A2**
(43) Veröffentlichungstag der Anmeldung: **02.05.2001**
(21) Anmeldenummer: 00122287.6
(22) Anmeldetag: 20.10.2000
(51) Int. Cl.: B60Q 1/26

(54) **Mehrkammerleuchteneinheit für ein Fahrzeug**

(30) Priorität: 27.10.1999 DE 19951653
(71) Anmelder: Volkswagen Aktiengesellschaft, 38436 Wolfsburg (DE)
(72) Erfinder: Werner, Michael, 38106 Braunschweig (DE)

(57) **Zusammenfassung**

Die Erfindung betrifft eine Leuchteneinheit für ein Fahrzeug, mit mindestens einem Reflektor (1 bis 5) und einem an dessen Rückseite lösbar anordbaren Leuchtmittelträger (10) mit mindestens einem Leuchtmittel (7, 8, 9). Erfindungsgemäß ist eine derartige Leuchteneinheit so zu gestalten, daß deren Bestückung mit dem mindestens einem Leuchtmittel (7, 8, 9) bzw. ein Leuchtmittelaustausch bei Beibehaltung der Betriebsposition des Reflektors von dessen Rückseite her auch bei einer nur begrenzten Zugänglichkeit ermöglicht ist. Dazu ist das Leuchtmittel (7, 8, 9) gegenüber seiner vorbestimmten Stellung zum Reflektor (1 bis 5) im vormontierten Zustand stellungsveränderbar.

## Beschreibung

Die Erfindung betrifft eine Leuchteneinheit für ein Fahrzeug, insbesondere für ein Personenkraftfahrzeug, die mehrere Reflektoren und diesen zugeordnete Leuchtmittel, insbesondere Glühlampen aufweist.

Derzeitig werden die meisten Fahrzeuge mit Leuchteneinheiten ausgerüstet, in denen mehrere Reflektoren und diesen zugeordnete Glühlampen in einer sogenannten Leuchteneinheit zusammengefaßt sind, wobei für das einer Leuchte zugeordnete Leuchtmittel eine separate Kammer mit einem Reflektor ausgebildet ist. Die Leuchtmittel sind in der Regel an einem gemeinsamen Leuchtmittelträger angeordnet, der an der Rückseite der Reflektoren anordbar ist. Für die Montage des mit den Leuchtmitteln bestückten Leuchtmittelträgers an den Reflektoren und auch für eine Demonatge, beispielsweise zum Austauschen defekter Leuchtmittel, ist ein dafür ausreichender Montagefreiraum erforderlich.

Bei Anordnung der Leuchteneinheit in einem durch das Karosserieblech und eine Abdeckscheibe gebildeten Raum kann die Montage oder Demontage des Leuchmittelträgers über eine Aussparung im Karosserieblech erfolgen. Diese Aussparung ist durch die Fahrzeugkonzeption vorgegeben, und der entsprechende Blechschnitt bestimmt die Werkzeuggestaltung. Ist die Aussparung für eine Nachrüstung des Fahrzeugs mit einer Leuchteneinheit oder auch eine Umrüstung einer solchen ungeeignet, weil zu klein für den Leuchtenträger, müßte das Karosserieblech mit der Aussparung aufwendig geändert werden, wenn das Problem nicht mit anderen Maßnahmen gelöst werden kann. Für einen erleichterten Leuchtmittelwechsel sind aus der DE 30 30 427 A1 und der DE 41 27 716 C1 Lösungen bekannt, bei denen ein jeweiliger Scheinwerfer um eine Querachse aus einer Karosserieöffnung herausklappbar ist. Auch die EP 0 501 133 beschreibt einen Scheinwerfer, der zum erleichterten Wechseln eines Leuchtkörpers aus einer Betriebsstellung in eine geeignete Montagestellung verbringbar ist. Diese Lösungen sind jedoch ebenfalls aufwendig.

Der Erfindung liegt nun die Aufgabe zugrunde, eine Leuchteneinheit für ein Fahrzeug nach dem Oberbegriff des Anspruchs 1 so zu gestalten, daß deren Bestückung mit Leuchtmitteln bzw. ein Leuchtmittelaustausch bei Beibehaltung der Betriebsposition der Reflektoren von deren Rückseite her auch bei einer nur begrenzten Zugänglichkeit ermöglicht ist.

Diese Aufgabe wird bei einer Leuchteneinheit mit den Merkmalen der Ansprüche 1 und 2 gelöst.

Die Erfindung besteht darin, daß bei einer Leuchteneinheit mit mindestens einem Reflektor und einem dem Reflektor zugeordneten Leuchtmittelträger mit mindestens einem Leuchtmittel zur Anordnung in dem Reflektor das Leuchtmittel gegenüber seiner vorbestimmten Stellung zu dem Reflektor in einer Nichtbetriebsstellung, in der das Leuchtmittel am Leuchtmittelträger vormontiert ist, stellungsveränderbar ist. Damit ist es möglich, den Leuchtmittelträger mit dem vormontierten Leuchtmittel in eine Gestalt zu bringen, mit der dieser beispielsweise durch eine vorgegebene Aussparung in einem Karosserieblech führbar ist, was ohne diese Maßnahme nicht möglich wäre, so daß sich diesbezügliche Konstruktionsänderungen am Fahrzeug, verbunden mit aufwendigen Änderungen am Blechschnitt, erübrigen.

Dabei kann der Leuchtmittelträger aus Kunststoff gefertigt sein und aus einem Basisteil und einem an diesem schwenkbar angeordneten Teil bestehen, und das Leuchtmittel kann an letzterem angeordnet sein, so daß der Leuchtmittelträger auf einfache Weise durch ein Schwenken dieses Teils in eine für eine Montage oder eine Demontage günstigere Gestalt bringbar ist. Beide Teile sind vorteilhaft durch ein Filmscharnier miteinander verbunden, wodurch auf ebenfalls einfache Weise die Einstückigkeit des Leuchtenträgers sichergestellt ist.

Das Filmscharnier ist vorteilhaft auf der den Reflektoren zugewandten Seite des Leuchtmittelträgers und dort auf der dem schwenkbaren Teil abgewandten Seite einer diesem zugewandten Wandung des Basisteils ausgebildet. Dadurch kann in Verbindung mit Rastetementen, die auf der den Reflektoren abgewandten Seite ausgebildet sind, verhindert werden, daß bei einem Bruch des Filmscharniers der Leuchtmittelträger auseinanderfällt. In der Betriebsstellung, in der der Leuchtmittelträger mit den Reflektoren lösbar verbunden ist, sind beide Teile, aneinander anliegend, über diese Rastelemente fixiert.

Zur elektrischen Kontaktierung sind am schwenkbaren Teil vorzugsweise Kontaktfedern für am Basisteil ausgebildete Kontakte angeordnet. In der Betriebsstellung ist der elektrische Kontakt zwischen diesen hergestellt.

Die Erfindung wird nachstehend an einem Ausführungsbeispiel dargestellt. In den zugehörigen Zeichnungen zeigen schematisch:
- Fig. 1:: eine Rückleuchteneinheit in der Hauptansicht,
- Fig. 2:: den Leuchtmittelträger der Rückleuchteneinheit,
- Fig. 3:: den Leuchtmittelträger, teilweise gebrochen und geschnitten, in Montagestellung,
- Fig. 4:: denselben in der Betriebsposition und
- Fig. 5:: die Montagephasen für den Leuchtmittelträger.

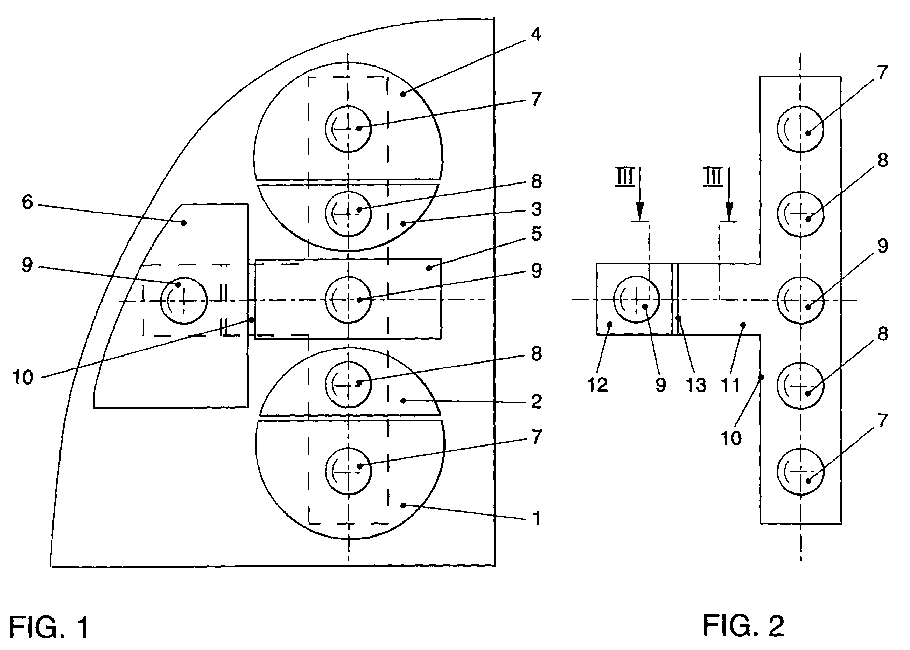

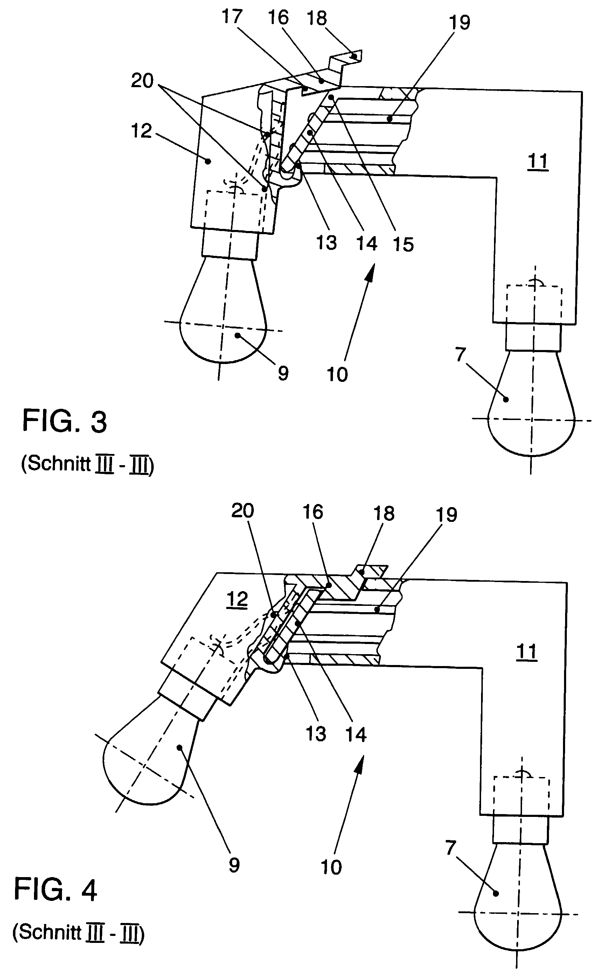

Fig. 1 zeigt eine Rückleuchteneinheit für einen Personenkraftwagen mit mehreren Reflektoren 1 bis 6, von denen die übereinander angeordneten Reflektoren 1 bis 4 zur Bildung des Schlußlichtes dienen und wobei die Reflektoren 1 und 2 und die Reflektoren 3 und 4 infolge ihrer unterschiedlichen Größe außermittig durch eine als Steg erscheinende Trennwand voneinander getrennt sind. Die beiden außenliegenden Reflektoren 1 und 4 werden auch zur Bildung des Bremslichtes und des Nebelrücklichtes genutzt. Der in der vertikalen Anordnung in der Mitte befindliche Reflektor 5 bildet den Rückfahrscheinwerfer und der außen neben diesem angeordnete Reflektor 6 das Blinklicht. Die den Reflektoren 1 bis 6 zugeordneten Glühlampen 7, 8 und 9, die entsprechend ihrer Bestimmung unterschiedliche Leistungen haben, wobei die Glühlampen 7 für die Reflektoren 1 und 4 Zweifadenlampen mit den Leistungen 5 W und 21 W, die Glühlampen 8 für die Reflektoren 2 und 3 Einfadenlampen mit einer Leistung von 5 W und die Glühlampen 9 für die Reflektoren 5 und 6 Einfadenlampen mit einer Leistung von 21 W sind, sind auf einem gemeinsamen Leuchtmittelträger 10 angeordnet. Dieser ist einstückig aus Kunststoff gespritzt und aus einem Basisteil 11 (Fig. 2) und einem schwenkbar an diesem angeordneten Teil 12 gebildet, an dem die Glühlampe 9 für den Reflektor 6 gehaltert ist. Der Teil 12 ist über ein Filmscharnier 13 einstückig mit dem Basisteil 11 verbunden. Die Fig. 3 und 4 zeigen den Leuchtmittelträger 10 in einer vergrößerten Darstellung. Das Filmscharnier 13 ist auf der den Reflektoren 1 bis 6 zugewandten Seite, somit auch leuchtmittelseitig, und auf der dem schwenkbaren Teil 12 abgewandten Seite einer diesem (12) zugewandten Wandung 14 des Basisteils 11 angeformt. Beide Teile 11 und 12 weisen Rastelemente auf, von denen das am Basisteil 11 ausgebildete Rastelement 15 eine Aussparung in der Wandung 14 und das am Teil 12 ausgebildete Rastelement eine Rastzunge 16 mit einer Hinterschneidung 17 und einer Betätigungslasche 18 ist. Die vorbeschriebene Anordnung des Filmscharniers 13 hat den Vorteil, daß bei einem Bruch desselben in der Betriebsstellung beide Teile miteinander verbunden bleiben. In der (einer von vielen) Montagestellung sind die beiden Teile 11 und 12 voneinander getrennt (Fig. 3) und in der Betriebsstellung (Fig. 4) miteinander verrastet. Die Stromversorgung der Glühlampe 9 in der Betriebsstellung ist durch am Basisteil 11 ausgebildete und als Festkontakte dienende Kontaktbahnen 19, gegeben, die von Kontaktfedern 20 kontaktiert werden, die mit den Glühlampen 9 verbunden sind.

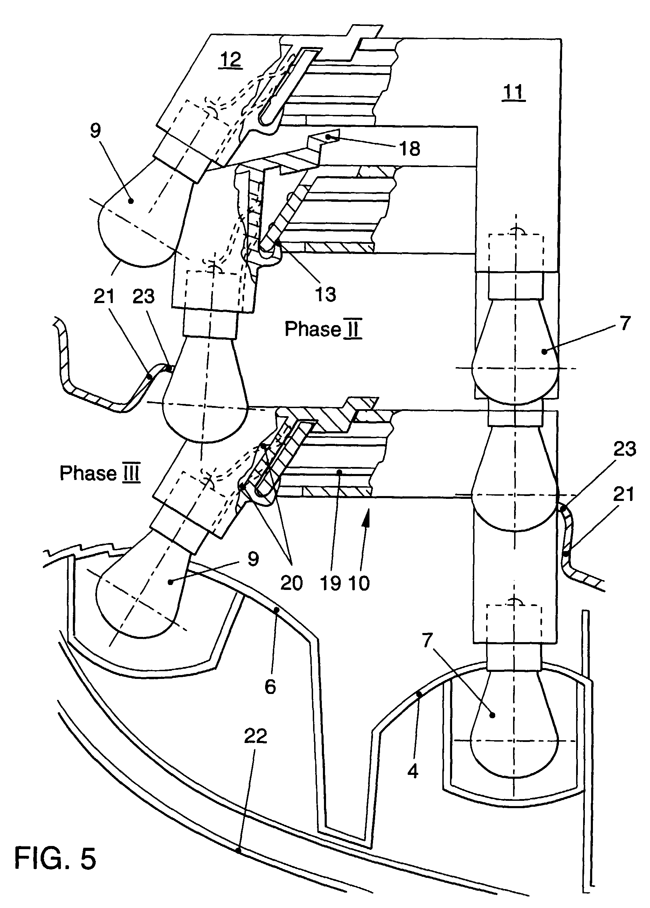

Fig. 5 zeigt die Montagephasen des Leuchtmittelträgers 10 an der Rückleuchteneinheit, die zwischen einem Karosserieblech 21 und der Abdeckscheibe 22 hinter einer Aussparung 23 im Karosserieblech 21 angeordnet ist, die in ihrer horizontalen Ausdehnung zu schmal für den Leuchtmittelträger 10 ist (Phase I). Damit dieser durch die Aussparung 23 hindurchgeführt werden kann, werden die Verrastung durch ein Wegziehen der Betätigungslasche 18 vom Basisteil 11 gelöst und der schwenkbare Teil 12 um das Filmscharnier 13 nach innen geschwenkt (Phase II). Nach dem Hindurchführen des Leuchtmittelträgers 10 mit der veränderten Gestalt durch die Aussparung 23 und dem Einsetzen der Glühlampen 7 bis 9 in die Reflektoren 1 bis 6 wird die Verrastung wieder hergestellt, wobei gleichzeitig die elektrische Kontaktierung zwischen den Kontaktfedern 20 und der Kontaktbahnen 19 erfolgt. Damit ist die Betriebsbereitschaft (Betriebsstellung, Phase III) hergestellt. Eine Demontage des Leuchtmittelträgers erfolgt in umgekehrter Reihenfolge.

### BEZUGSZEICHENLISTE

- 1: Reflektor
- 2: Reflektor
- 3: Reflektor
- 4: Reflektor
- 5: Reflektor
- 6: Reflektor
- 7: Glühlampe
- 8: Glühlampe
- 9: Glühlampe
- 10: Leuchtmittelträger
- 11: Basisteil
- 12: schwenkbarer Teil
- 13: Filmscharnier
- 14: Wandung
- 15: Rastelement
- 16: Rastzunge
- 17: Hinterschneidung
- 18: Betätigungslasche
- 19: Kontaktbahn
- 20: Kontaktfeder
- 21: Karosserieblech
- 22: Abdeckscheibe
- 23: Aussparung

## Patentansprüche

1. Leuchteneinheit für ein Fahrzeug mit mindestens einem Reflektor (1 bis 5) und einem Leuchtmittelträger (10) mit mindestens einem dem Reflektor (1 bis 5) zugeordneten Leuchtmittel (7, 8, 9), **dadurch gekennzeichnet,** daß das Leuchtmittel (7, 8, 9) gegenüber seiner vorbestimmten Stellung zu dem Reflektor (1 bis 5) im vormontierten Zustand stellungsveränderbar ist.

2. Leuchteneinheit für ein Fahrzeug, mit mehreren Reflektoren (1 bis 5) und mindestens einem Leuchtmittelträger (10) mit mehreren neben- und/ oder übereinander angeordneten, den Reflektoren (1 bis 5) zugeordneten Leuchtmitteln (7, 8, 9), **dadurch gekennzeichnet,** daß wenigstens eines der äußeren der neben- und/ oder übereinander angeordneten Leuchtmittel (7, 8, 9) gegenüber seiner vorbestimmten Stellung zu den Reflektoren (1 bis 5) und den übrigen Leuchtmitteln (7, 8, 9) im vormontierten Zustand stellungsveränderbar ist.

3. Leuchteneinheit nach Anspruch 1 oder 2, **dadurch gekennzeichnet,** daß der Leuchtmittelträger (10) aus einem Basisteil (11) und einem an diesem schwenkbar angeordneten Teil (12) gebildet ist, und daß das Leuchtmittel (7, 8, 9) an dem Teil (12) angeordnet ist.

4. Leuchteneinheit nach Anspruch 3, **dadurch gekennzeichnet,** daß der Teil (12) durch ein Filmscharnier (13) einstückig mit dem Basisteil (11) verbunden ist.

5. Leuchteneinheit nach Anspruch 4, **dadurch gekennzeichnet,** daß das Filmscharnier (13) auf der dem mindestens einem Reflektor (1 bis 5) zugewandten Seite des Leuchtmittelträgers (10) ausgebildet ist.

6. Leuchteneinheit nach Anspruch 5, **dadurch gekennzeichnet,** daß das Filmscharnier (13) auf der dem Teil (12) abgewandten Seite einer diesem zugewandten Wandung (14) des Basisteils (11) ausgebildet ist.

7. Leuchteneinheit nach Anspruch 3 oder 4, **dadurch gekennzeichnet,** daß der Teil (12) in der Betriebsstellung des Leuchtmittelträgers (10) mit dem Basisteil (11) verrastet ist.

8. Leuchteneinheit nach einem oder mehreren der vorhergehenden Ansprüche, **dadurch gekennzeichnet,** daß am Teil (12) Kontaktfedern (20) zur elektrischen Kontaktierung des Leuchtmittels (7, 8, 9) für am Basisteil (11) ausgebildete Kontakte (19) angeordnet sind, die in der Betriebsstellung in elektrischem Kontakt miteinander stehen.
